**Europäisches Patentamt**

**European Patent Office**

**Office européen des brevets**

(19)

(11) Veröffentlichungsnummer: **0 054 850**
**B1**

(12) **EUROPÄISCHE PATENTSCHRIFT**

(45) Veröffentlichungstag der Patentschrift:
27.06.84

(51) Int. Cl.³: **C 01 B 21/096**

(21) Anmeldenummer: 81110308.4

(22) Anmeldetag: 10.12.81

(54) **Verfahren zur Herstellung von Ammoniumsulfamat.**

(30) Priorität: 19.12.80 DE 3048057

(43) Veröffentlichungstag der Anmeldung:
30.06.82 Patentblatt 82/26

(45) · Bekanntmachung des Hinweises auf die Patenterteilung:
27.06.84 Patentblatt 84/26

(84) Benannte Vertragsstaaten:
**BE DE FR GB IT NL**

(56) Entgegenhaltungen:
**EP - A - 0 012 837**
**DE - A - 1 915 723**
**DE - A - 2 710 399**
**DE - A - 2 909 032**
**DE - A - 2 909 033**
**DE - C - 668 142**
**US - A - 2 426 420**

(73) Patentinhaber: **HOECHST AKTIENGESELLSCHAFT,**
**Postfach 80 03 20, D-6230 Frankfurt am Main 80 (DE)**

(72) Erfinder: **Metzger, Adolf, Dr., Matterhornstrasse 3,**
**D-6200 Wiesbaden (DE)**
Erfinder: **Konrad, Rolf, Königsteiner Strasse 122,**
**D-6374 Steinbach (DE)**
Erfinder: **Gräser, Reinhold, Dr., Loreleistrasse 81,**
**D-6230 Frankfurt am Main 80 (DE)**

BUNDESDRUCKEREI BERLIN

## Beschreibung

Die Erfindung betrifft ein verbessertes Verfahren zur Herstellung von Ammoniumsulfamat aus Ammoniak und Schwefeltrioxid unter Druck. Ammoniumsulfamat stellt ein wichtiges Ausgangsmaterial zur Herstellung freier Amidosulfonsäure dar.

Es ist bereits bekannt, Ammoniumsulfamat durch Einleiten von Ammoniak und Schwefeltrioxid unter Druck herzustellen (DE-A-19 15 723). Dabei arbeitet man unter Bedingungen, unter denen das Reaktionsprodukt schmelzflüssig anfällt. Das Reaktionsprodukt besteht überwiegend aus Ammoniumsulfamat mit geringen Anteilen an Ammonium-Imidodisulfonat und etwas Ammoniumsulfat. Dabei kann man Ammoniak und Schwefeltrioxid in flüssiger Form verwenden und beispielsweise so verfahren, daß Ammoniak und Schwefeltrioxid durch Einleitungsrohre unmittelbar in das flüssige im unteren Teil des Reaktionsgefäßes befindliche geschmolzene Reaktionsgemisch eingebracht werden.

Nach der Lehre dieser Literaturstelle arbeitet man mit einem Ammoniaküberschuß, der vorzugsweise das 2- bis 4fache der stöchiometrischen Menge beträgt. Das überschüssige Ammoniak wird aus dem Reaktionsgefäß abgezogen und kann erneut wieder eingesetzt werden.

Bei diesem Verfahren kann es vorkommen, daß die Abgasleitungen und Armaturen beim kontinuierlichen Abblasen von überschüssigem Ammoniak sehr rasch durch mitgerissene Schmelzetröpfchen und Feststoffanteile verstopfen. Um diesem Problem abzuhelfen, wird gemäß DE-A1-2 710 399 Ammoniak im Unterschuß angewendet; die sich über der Schmelze im Reaktor ansammelnden Gase werden nicht aus dem Reaktionsraum entfernt. Das Arbeiten mit einem Ammoniak-Unterschuß bringt jedoch andere Nachteile mit sich. So werden Reaktionsgeschwindigkeit und Umsetzungsgrad verringert, wenn durch Zersetzung von Ammoniumsulfamat bei höherer Temperatur Stickstoff entsteht, der sich als inertes Gas im Gasraum des Reaktors anreichert und so den Ammoniakpartialdruck erniedrigt.

Um diesem Nachteil abzuhelfen, wird daher in der DE-A1-2 909 033 empfohlen, das Druckgefäß nach längeren Reaktionszeiten kurz zu entspannen und so die Hauptmenge der sich ansammelnden Inertgase auszuschleusen.

Aus der DE-A1-2 909 032 ist es bekannt, daß die Raum-Zeitausbeute an Ammoniumsulfamat-Schmelze in einem gegebenen Reaktor in erster Linie durch die Möglichkeit begrenzt ist, die frei werdende Reaktionswärme abzuführen. Es wird daher empfohlen, den Reaktionspartner Ammoniak ganz oder teilweise in flüssiger Form einzusetzen und dabei die latente Verdampfungswärme von Ammoniak für die Kühlung auszunutzen. Auch hier wird kein überschüssiger Ammoniak durch den Reaktor geleitet. Ferner wird in dieser Literaturstelle nicht expressis verbis angegeben, an welcher Stelle der flüssige Ammoniak in das emaillierte Rührgefäß eingeleitet wird.

Es bestand daher die Aufgabe, ein Verfahren zu finden, das die Nachteile der bekannten Verfahren nicht aufweist. Ein solches Verfahren sollte die optimale Kühlwirkung von flüssigem Ammoniak im Überschuß verbinden mit der kontinuierlichen Ausschleusung von überschüssigem Ammoniak und andererseits nicht anfällig sein gegen Verstopfungen der Gasableitungsrohre.

Es wurde nun ein Verfahren zur kontinuierlichen Herstellung von Ammoniumsulfamat ausgehend von Ammoniak und Schwefeltrioxyd gefunden, bei dem flüssiges Schwefeltrioxyd und flüssiges Ammoniak in einem Molverhältnis $NH_3/SO_3$ von über 2,0 : 1 in einen Druckreaktor eingeleitet werden, der schmelzflüssiges Reaktionsprodukt enthält, wobei überschüssiges Ammoniak aus dem Reaktor kontinuierlich entfernt und das flüssige Schwefeltrioxyd in die Schmelze eingeleitet wird. Das Verfahren ist dadurch gekennzeichnet, daß das flüssige Ammoniak auf die Oberfläche der Schmelze geleitet wird.

Schwefeltrioxyd wird z. B. durch ein abgetauchtes Rohr in die Schmelze eingeleitet. Es wurde gefunden, daß das aus dem Reaktor austretende überschüssige Ammoniak keine Feststoffanteile mehr enthält, selbst wenn man das Ammoniak in größerem Überschuß flüssig in den Reaktor einspeist. Wird hingegen das flüssige Ammoniak unter die Oberfläche der Schmelze gegeben, so verspritzt viel Schmelze und es werden erhebliche Feststoffanteile vom nicht umgesetzten Ammoniak mitgerissen. Beim erfindungsgemäßen Verfahren ist es möglich, durch das verdampfende überschüssige Ammoniak die Schmelze zu kühlen und einen großen Teil der erheblichen Reaktionswärme durch direkte Verdampfungskühlung abzuführen. Ein Teil der Reaktionswärme wird durch Wandkühlung oder durch Kühlschlangen oder durch einen von der Schmelze durchströmten Wärmetauscher abgeführt. Die Ammoniakmenge beträgt dabei vorzugsweise das 1,1- bis 10fache, insbesondere aber das 1,2- bis 4fache der stöchiometrisch zur Bildung von Ammoniumsulfamat nötigen Menge (Molverhältnis $NH_3/SO_3$ 2,2 : 1 bis 20 : 1, insbesondere 2,4 : 1 bis 8 : 1).

Das Verfahren wird unter Druck, vorzugsweise unter einem Druck von 2 bis 30 bar, insbesondere von 5 bis 20 bar, und bei einer Temperatur von 120 bis 300°C, vorzugsweise von 160 bis 250°C durchgeführt. Das überschüssige Ammoniak wird gasförmig aus dem Reaktor abgezogen. Es kann durch Kompression und Kühlung verflüssigt und in den Prozeß wieder eingesetzt werden. Eine besondere Ausführungsform des erfindungsgemäßen Verfahrens besteht darin, daß man das verdampfte überschüssige Ammoniak in einem auf dem Reaktor aufgesetzten Rückflußkühler kondensiert und anschließend in den Reaktor zurückführt. Ferner besteht die Möglichkeit, das überschüssige Ammoniak in Wasser oder verdünnter Salpetersäure zu absorbieren und die Absorptionslösung zur Düngemittelherstellung zu verwenden.

Das Verfahren wird vorzugsweise kontinuierlich so durchgeführt, daß die Ausgangsprodukte kontinuierlich eingeführt werden und die entstehende Schmelze von Ammoniumsulfamat kontinuierlich abgezogen wird. Es ist vorteilhaft, wenn das eingeführte Schwefeltrioxyd in der Schmelze möglichst rasch verteilt wird. Dies kann man dadurch erreichen, daß man die Schmelze im Reaktor mit hoher Strömungsgeschwindigkeit an der Einleitestelle für Schwefeltrioxyd vorbeiführt. Am besten wird ein Rührkessel verwendet. Die Einleitstelle für $SO_3$ soll möglichst tief in die Schmelze eintauchen, damit kein $SO_3$ in den Gasraum entweicht. Eine Reaktion von $SO_3$ mit $NH_3$ im Gasraum ist nicht erwünscht. Da die Schmelze sehr korrosiv ist, ist es ferner vorteilhaft, einen Emailkessel als Druckreaktor zu verwenden.

Das Reaktionsprodukt enthält ca. 80—86,5% Ammoniumsulfamat, 10—15% Ammoniumimidosulfonat, 3—5% Ammoniumsulfat und ca. 0,3—0,5% freies Ammoniak. (Etwa 1% Ammoniumsulfat wird gebildet durch Wasser, das mit den Einsatzstoffen $NH_3$ und $SO_3$ eingeschleppt wird. Der Rest entsteht durch Nebenreaktionen in der Schmelze. Obwohl gasförmige Einsatzstoffe frei sind von Wasser, führen auch sie zu Schmelzen, die ca. 5% Ammoniumsulfat enthalten.) Es kann direkt mit Säuren, z. B. verdünnter Salpetersäure, zu Amidosulfonsäure umgesetzt werden. Die Erfindung wird in den nachstehenden Beispielen näher erläutert.

### Beispiel 1

#### a) Apparatur

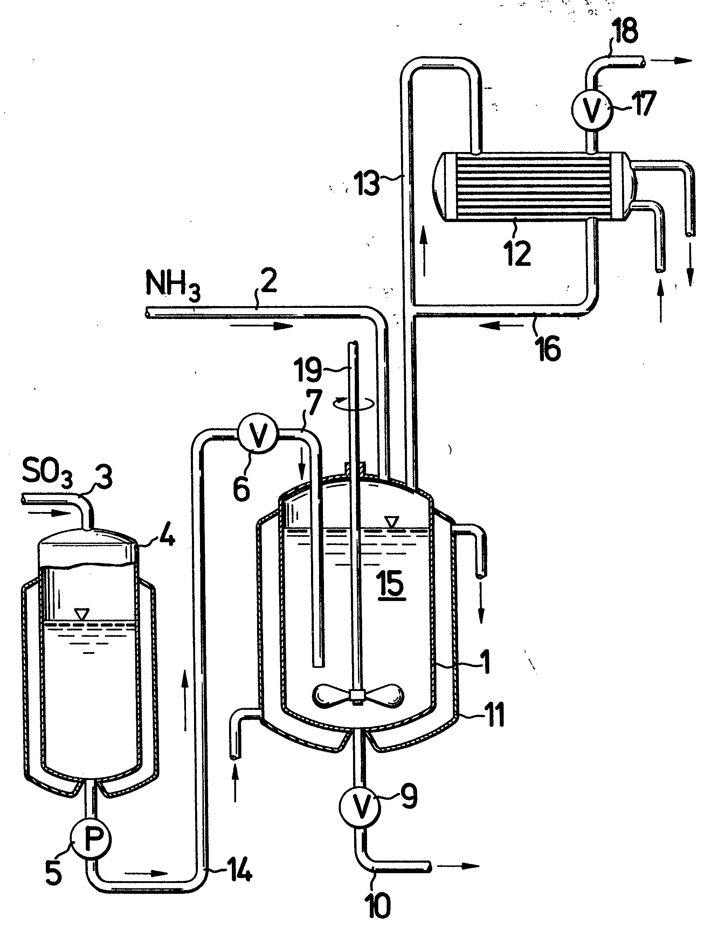

Die verwendete Apparatur ist in der Figur schematisch dargestellt. Als Reaktionsgefäß dient ein emaillierter 3 $m^3$-Rührkessel (1) mit Rührer (19). Schwefeltrioxid wird über die Zuleitung (3) in die Vorlage (4) gegeben. Mit Hilfe der Membranpumpe (5) wird Schwefeltrioxid über Leitung (14) und Ventil (6) durch das Einleitungsrohr (7) in die Schmelze (15) eingeleitet. Dabei ist auf eine optimale Verteilung des Schwefeltrioxids in der Schmelze zu achten (Vor Einleiten des $SO_3$ wird zweckmäßigerweise das Rohr (7) mit Stickstoff freigespült.) Gleichzeitig wird flüssiges Ammoniak über die Leitung (2) in den Kessel (1) auf die Schmelze (15) aufgegeben. Zur Abführung von Reaktionswärme ist der Reaktor (1) mit einem Kühlmantel (11) versehen. Dieser wird mit Wärmeträgeröl gekühlt. Die Schmelze wird nach der Entspannung durch das Ventil (9) über Leitung (10) kontinuierlich aus dem Reaktor entnommen und z. B. mit Salpetersäure weiter umgesetzt. Im Kondensator (12) wird das aus dem Reaktor über Leitung (13) kommende Ammoniak kondensiert und über Leitungen (16) und (13) wieder zum Reaktor (1) zurückgeführt. Der Kondensator (12) wird über einen Kühlkreislauf mit Wasser oder Sole auf der erforderlichen Temperatur gehalten. Über Ventil (17) und Leitung (18) verläßt der Ammoniaküberschuß nebst Inertgasen das System.

Eine andere Variante des Verfahrens (nicht gezeichnet) besteht darin, das nicht zur Reaktion benötigte Ammoniak nicht zu kondensieren, sondern in einer Kolonne zu absorbieren.

#### b) Ausführung

Stündlich werden 442 kg Schwefeltrioxid und 350 kg flüssiges Ammoniak in den Kessel 1 gegeben. Das Molverhältnis $NH_3/SO_3$ beträgt ca. 3,7 : 1, die Reaktionstemperatur 210°, der Druck 7 bar. Die Vorlauftemperatur des Öls liegt bei 90°C.

Pro Stunde werden 625 kg Schmelze (Zusammensetzung: 83 Gew.-% Ammoniumsulfamat, 13% Ammonium-imidodisulfonat, 3,5% Ammoniumsulfat, 0,5% Ammoniak) erzeugt, aus der nach der Umsetzung mit Salpetersäure 470 kg Amidosulfonsäure erhalten werden können.

### Beispiel 2

Benutzt wird die gleiche Apparatur wie in Beispiel 1. In den Reaktor werden 436 kg $SO_3$/h und 248 kg $NH_3$/h eingeleitet (Molverhältnis $SO_3 : NH_3 = 1 : 2,7$) bei einer Reaktionstemperatur von 218°C und einem Druck von 8 bar. Hierbei entstehen stündlich 617 kg Schmelze der gleichen Zusammensetzung wie in Beispiel 1. Nach Umsetzung mit Salpetersäure lassen sich daraus 462 kg/h Amidosulfonsäure herstellen.

Beim Rühren bildet die Oberfläche der Schmelze eine Trombe. Das Ende des Einleitrohres für $NH_3$ endet nur wenig oberhalb des tiefsten Punktes der Trombe. Auf diese Weise wird erreicht, daß das flüssige $NH_3$ kaum mit der Innenseite des Reaktors in Berührung kommt und von dort auf die Schmelze fließt. Bei Verwendung eines Reaktors, der innen emailliert ist, würde beim Auftreffen von flüssigem $NH_3$ auf die Innenseite die Gefahr bestehen, daß die Emaillierung abplatzt.

### Patentansprüche

1. Verfahren zur kontinuierlichen Herstellung von Ammoniumsulfamat ausgehend von Ammoniak und Schwefeltrioxid durch Einleiten von flüssigem Schwefeltrioxid und flüssigem Ammoniak in einem Molverhältnis $NH_3/SO_3$ von über 2,0 : 1 in einen Druckreaktor, der schmelzflüssiges Reaktionsprodukt enthält, wobei überschüssiges Ammoniak aus dem Reaktor kontinuierlich entfernt und das flüssige Schwefeltrioxid in die Schmelze eingeleitet wird, dadurch gekennzeichnet, daß das flüssige Ammoniak auf die Oberfläche der Schmelze geleitet wird.

2. Verfahren nach Anspruch 1, dadurch gekennzeichnet, daß das Molverhältnis der einge- leiteten Produkte NH$_3$/SO$_3$ 2,2 : 1 bis 20 : 1 beträgt.

3. Verfahren nach Anspruch 1 oder 2, dadurch gekennzeichnet, daß das überschüssige Ammoniak in einem Rückflußkühler kondensiert und in den Reaktor zurückgeführt wird.

4. Verfahren nach Anspruch 1, dadurch gekennzeichnet, daß man die Schmelze im Reaktor mit hoher Strömungsgeschwindigkeit an der Einleitstelle für Schwefeltrioxid vorbeiführt.

5. Verfahren nach Anspruch 1, dadurch gekennzeichnet, daß man bei einem Druck von 2 bis 30 bar, vorzugsweise 5 bis 20 bar arbeitet.

6. Verfahren nach Anspruch 1 oder 5, dadurch gekennzeichnet, daß man in der Schmelze eine Temperatur von 160 bis 250° C aufrecht hält.

7. Verfahren nach Anspruch 1, dadurch gekennzeichnet, daß ein Emailkessel als Druckreaktor verwendet wird.

## Claims

1. A process for the continuous preparation of ammonium sulfamate, starting from ammonia and sulfur trioxide, by introducing liquid sulfur trioxide and liquid ammonia in a molar ratio NH$_3$/SO$_3$ greater than 2,0 : 1 into a pressure reactor containing the reaction product in a molten state, excess ammonia being removed continuously from the reactor and the liquid sulfur trioxide being introduced into the melt, which comprises introducing the liquid ammonia onto the surface of the melt.

2. A process as claimed in claim 1, wherein the molar ratio NH$_3$/SO$_3$ of the products which are introduced is 2,2 : 1 to 20 : 1.

3. A process as claimed in claim 1 or 2, wherein the excess ammonia is condensed in a reflux condenser and recycled to the reactor.

4. A process as claimed in claim 1, wherein the melt in the reactor is made to flow past the inlet point for sulfur trioxide at a high rate of flow.

5. A process as claimed in claim 1, which is carried out under a pressure of 2 to 30 bars, pref- erably 5 to 20 bars.

6. A process as claimed in claim 1 or 5, wherein a temperature of 160 to 250°C is maintained in the melt.

7. A process as claimed in claim 1, wherein an enamelled kettle is used as the pressure reactor.

## Revendications

1. Procédé de préparation continu de sulfamate d'ammonium à partir d'ammoniac et de trioxyde de soufre, par introduction de trioxyde de soufre liquide et d'ammoniac liquide dans un rapport molaire NH$_3$/SO$_3$ supérieur à 2,0 : 1, dans un réacteur à pression contenant du produit réactionnel fondu liquide, l'excès d'ammoniac étant éliminé continuellement du réacteur et le trioxyde de soufre liquide étant introduit dans la matière fondue, procédé caractérisé en ce que l'ammoniac liquide est amené à la surface de la matière fondue.

2. Procédé selon la revendication 1, caractérisé en ce que le rapport molaire des corps intro- duits NH$_3$/SO$_3$ est compris entre 2,2 : 1 et 20 : 1.

3. Procédé selon l'une des revendications 1 et 2, caractérisé en ce que l'excès d'ammoniac est condensé dans un réfrigérant à reflux et est renvoyé au réacteur.

4. Procédé selon la revendication 1, caractérisé en ce que la matière fondue, dans le réacteur, passe avec une grande vitesse d'écoulement devant l'endroit par où arrive le trioxyde de soufre.

5. Procédé selon la revendication 1, caractérisé en ce qu'on opère sous une pression de 2 à 30 bar, de préférence de 5 à 20 bar.

6. Procédé selon l'une des revendications 1 et 5, caractérisé en ce qu'on maintient, dans la matière fondue, une température de 160 à 250°C.

7. Procédé selon la revendication 1, caractérise en ce qu'on utilise, comme réacteur à pres- sion, un chaudron émaillé.

NH₃

SO₃